# EUROPEAN PATENT APPLICATION

(11) **EP 4 068 496 A1**
(43) Date of publication of application: **05.10.2022**
(21) Application number: 20907650.4
(22) Date of filing: 23.10.2020
(51) Int. Cl.: H01M 50/572

(54) **COVER PLATE ASSEMBLY, BATTERY, BATTERY MODULE, POWER BATTERY PACK AND ELECTRIC VEHICLE**

(30) Priority: 26.12.2019 CN 201911367813
(71) Applicant: BYD Company Limited, Shenzhen, Guangdong 518118 (CN)
(72) Inventor: LU, Peng, Shenzhen, Guangdong 518118 (CN); LU, Zhipei, Shenzhen, Guangdong 518118 (CN); WANG, Xinyue, Shenzhen, Guangdong 518118 (CN); DENG, Dongjun, Shenzhen, Guangdong 518118 (CN); ZHU, Yan, Shenzhen, Guangdong 518118 (CN)
(74) Representative: Hoffmann Eitle
(86) International application number: PCT/CN2020/123304
(87) International publication number: WO 2021/129101

(57) **Abstract**

A cover plate assembly, a battery, a battery module, a power battery pack, and an electric vehicle are disclosed. The cover plate assembly includes a cover plate body (1), a first electrode terminal (2), a second electrode terminal, and a resistive coating (3). The second electrode terminal is insulatively connected with the cover plate body (1). The first electrode terminal (2) is electrically connected with the cover plate body (1) by the resistive coating (3). The resistive coating (3) includes a weak portion (331). When a current flowing through the resistive coating (3) is greater than a predetermined threshold, the weak portion (331) is melted to disconnect the cover plate body (1) from the first electrode terminal (2).

## Description

### CROSS-REFERENCE TO RELATED APPLICATIONS

The present disclosure claims priority to Chinese Patent Application No. 201911367813.3, filed by BYD Co., Ltd. on December 26, 2019 and entitled "COVER PLATE ASSEMBLY, BATTERY, BATTERY MODULE, POWER BATTERY PACK, AND ELECTRIC VEHICLE", which is incorporated herein by reference in its entirety.

### FIELD

The present disclosure relates to the technical field of batteries, and more specifically, to a cover plate assembly, a battery, a battery module, a power battery pack and an electric vehicle.

### BACKGROUND

In related arts, a positive electrode terminal of a battery and a cover plate body are directly connected by laser welding. A battery housing is positively charged, which may prevent corrosion of the housing or an explosion-proof valve caused by a low voltage of the housing. For battery cores led out from different ends of electrode terminals, a number of voltage sampling harnesses and temperature sampling harnesses of the battery can be reduced, thereby reducing costs. However, this method increases the risk of battery leakage and short circuits, which may easily cause arcing, fire, and even explosion accidents.

### SUMMARY

The present disclosure provides a cover plate assembly, a battery, a battery module, a power battery pack, and an electric vehicle. In case of a short circuit inside the battery module, the cover plate assembly cuts off the short circuit, which greatly improves the safety of the battery module.

According to a first aspect, an embodiment of the present disclosure provides a cover plate assembly of a battery, including a cover plate body, a first electrode terminal, a second electrode terminal, and a resistive coating. The second electrode terminal is insulatively connected with the cover plate body. The first electrode terminal is electrically connected with the cover plate body by the resistive coating. The resistive coating includes a weak portion. When a current flowing through the resistive coating is greater than a predetermined threshold, the weak portion is melted to disconnect the cover plate body from the first electrode terminal.

In the cover plate assembly of a battery provided in the embodiment of the present disclosure, the first electrode terminal is electrically connected with the cover plate body by the resistive coating, the resistive coating includes the weak portion, and when the current flowing through the resistive coating is greater than the predetermined threshold, the weak portion is melted to disconnect the cover plate body from the first electrode terminal. The resistive coating may conduct the first electrode terminal and the cover plate body to cause the cover plate body to be energized. In this way, the cover plate body or the explosion-proof valve may be prevented from being corroded, a number of voltage sampling harnesses and temperature sampling harnesses of the battery may be reduced, thereby reducing the costs. In addition, in case of the short circuit inside the battery module, the resistive coating can greatly reduce the short-circuit current, thereby preventing arcing, fire, and even explosion accidents, and improving the safety of the battery module. Moreover, when the current flowing through the resistive coating is greater than the predetermined threshold, the weak portion may be melted by heat generated by itself. In this way, the short circuit may be cut off, and the safety of the battery module may be further ensured. Furthermore, the resistive coating may reduce the space occupied by the entire cover plate assembly, and cause the structure of the cover plate assembly to be more compact, thereby increasing the volumetric energy density of the battery module.

According to a second aspect, a battery provided in an embodiment of the present disclosure includes the cover plate assembly according to the embodiment of the first aspect of the present disclosure.

According to a third aspect, a battery module provided in an embodiment of the present disclosure includes a battery according to the embodiment of the second aspect of the present disclosure.

According to a fourth aspect, a power battery pack provided in an embodiment of the present disclosure includes a battery module according to the embodiment of the third aspect of the present disclosure.

According to a fifth aspect, an electric vehicle provided in an embodiment of the present disclosure includes the power battery pack according to the embodiment of the fourth aspect of the present disclosure.

The additional aspects and advantages of the present disclosure will be provided in the following description, some of which will become apparent from the following description or may be learned from practice of the present disclosure.

### BRIEF DESCRIPTION OF THE DRAWINGS

The foregoing and/ or additional aspects and advantages of the present disclosure will become apparent and readily understood from the following descriptions of the embodiments with reference to the accompanying drawings, where:
FIG. 1 is a schematic structural diagram of a cover plate assembly of a battery according to an embodiment of the present disclosure.
FIG. 2 is a cross-sectional view of the cover plate assembly of the battery shown in FIG. 1.
FIG. 3 is an enlarged view of portion A circled in FIG. 2.

### REFERENCE NUMERALS:

100: Cover plate assembly;
1: Cover plate body; 11: Mounting hole; 111: Annular disc;
1111: Top portion; 1112: Bottom portion; 1113: Connecting portion;
2: First electrode terminal; 21: Pole; 22: Electrode cap;
3: Resistive coating; 31: First section; 32: Second section;
33: Third section; 331: Weak portion; 4: First insulating member;
5: Cover plate insulating member; 6: Inner lead-out sheet.

### DETAILED DESCRIPTION

Embodiments of the present disclosure are described in detail below, examples of which are shown in the accompanying drawings. Same or similar reference numerals throughout in all the accompanying drawings indicate same or similar components or components having same or similar functions. The embodiments described below with reference to the accompanying drawings are exemplary, and intended to explain the present disclosure and cannot be construed as a limitation to the present disclosure.

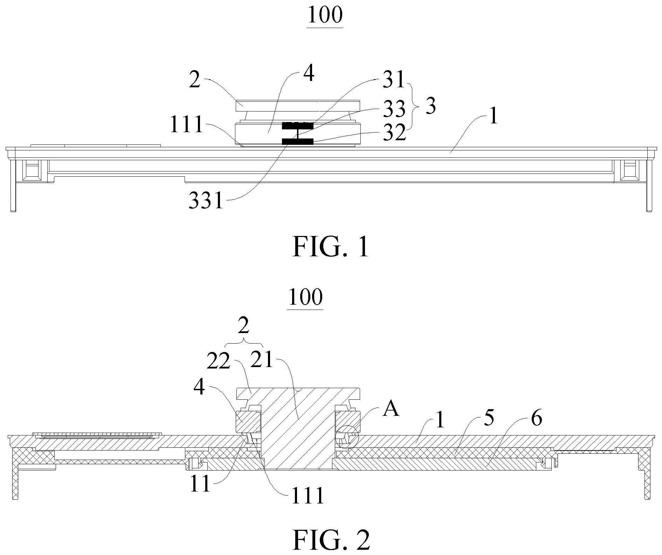

A cover plate assembly 100 of a battery (not shown) according to an embodiment of a first aspect of the present disclosure is described below with reference to FIGs. 1-3. The cover plate assembly 100 may be applicable to a battery module (not shown). In the following description of the present disclosure, the cover plate assembly 100 applicable to a battery module is used as an example for description.

As shown in FIG. 1 and FIG. 2, the cover plate assembly 100 of the battery according to the embodiment of the first aspect of the present disclosure includes a cover plate body 1, a first electrode terminal 2, a second electrode terminal (not shown), and a resistive coating 3. The second electrode terminal is insulatively connected with the cover plate body 1. The first electrode terminal 2 is electrically connected with the cover plate body 1 by the resistive coating 3. The resistive coating 3 includes a weak portion 331. When a current flowing through the resistive coating 3 is greater than a predetermined threshold, the weak portion 331 is melted to disconnect the cover plate body 1 from the first electrode terminal 2. The predetermined threshold includes a short-circuit current.

For example, in examples of FIG. 1 and FIG. 2, the first electrode terminal 2 and the second electrode terminal may have opposite polarities, and the resistive coating 3 is electrically connected between the first electrode terminal 2 and the cover plate body 1. Therefore, through the arrangement of the resistive coating 3, and the resistive coating 3 can conduct the first electrode terminal 2 and the cover plate body 1 to cause the cover plate body 1 to be energized. In this way, the cover plate body 1 or the explosion-proof valve may be prevented from being corroded, and a number of voltage sampling harnesses and temperature sampling harnesses of the battery can be reduced, thereby reducing costs. In addition, in case of an internally short circuit of the battery module, the resistive coating 3 can greatly reduce the short-circuit current, thereby preventing arcing, fire, and even explosion accidents, and improving the safety of the battery module. Moreover, when the current flowing through the resistive coating 3 is greater than the predetermined threshold, the weak portion 331 may be melted by heat generated by itself. In this way, the short circuit may be cut off, and the safety of the battery module may be further ensured. Furthermore, the resistive coating 3 may reduce the space occupied by the entire cover plate assembly 100, and cause the structure of the cover plate assembly 100 to be more compact, thereby increasing the volumetric energy density of the battery module.

The first electrode terminal 2 and the second electrode terminal have opposite polarities. For example, the first electrode terminal 2 is a positive electrode terminal, and the second electrode terminal is a negative electrode terminal. In this case, the cover plate body 1 is positively charged. The first electrode terminal is the negative electrode terminal, and the second electrode terminal is the positive electrode terminal. In this case, the cover plate body 1 is negatively charged. The "first and second" in the first electrode terminal 2 and the second electrode terminal are only used for distinguishing battery cores, and are not used to limit the number. For example, a number of first electrode terminals 2 and a number of second electrode terminals may be respectively arranged.

According to the cover plate assembly 100 of a battery provided in the embodiment of the present disclosure, the first electrode terminal 2 is electrically connected with the cover plate body 1 by the resistive coating 3. The resistive coating 3 includes the weak portion 331. When the current flowing through the resistive coating 3 is greater than the predetermined threshold, the weak portion 331 is melted to disconnect the cover plate body 1 from the first electrode terminal 2. The resistive coating 3 may conduct the first electrode terminal 2 and the cover plate body 1 to cause the cover plate body 1 to be energized. In this way, the cover plate body 1 or the explosion-proof valve may be prevented from being corroded, and the number of voltage sampling harnesses and temperature sampling harnesses of the battery can be reduced, thereby reducing costs. In addition, in case of the short circuit inside the battery module, the resistive coating 3 can greatly reduce the short-circuit current, thereby preventing arcing, fire, and even explosion accidents, and improving the safety of the battery module. Moreover, when the current flowing through the resistive coating 3 is greater than the predetermined threshold, the weak portion 331 may be melted by heat generated by itself. In this way, the short circuit may be cut off, and the safety of the battery module may be further ensured. Furthermore, the resistive coating 3 may reduce the space occupied by the entire cover plate assembly 100, and cause the structure of the cover plate assembly 100 to be more compact, thereby increasing the volumetric energy density of the battery module.

In some embodiments of the present disclosure, referring to FIG. 1, a size of the weak portion 331 is less than sizes of other parts of the resistive coating 3. For example, it may be obviously seen from FIG. 1 that a width of the weak portion 331 is less than widths of other parts of the resistive coating 3. Therefore, the size of the weak portion 331 is less than the sizes of the other parts of the resistive coating 3, so that a resistance value of the weak portion 331 is less than resistance values of the other parts of the resistive coating 3. In this way, the weak portion 331 may be melted by the heat generated by itself when the short circuit inside the battery module occurs, so as to cut off the short circuit, thereby ensuring the safety of the battery module. It should be noted that the "size" may be a width in FIG. 1, or may be a thickness, a length, a diameter, or the like. It may be understood that the meaning of "size" may be specifically defined according to a shape of the resistive coating 3, not just referring to the width.

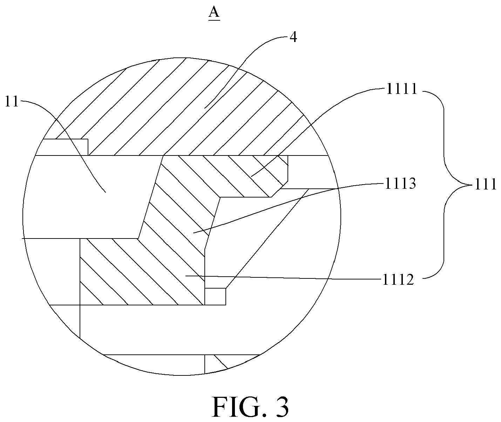

In some embodiments of the present disclosure, with reference to FIG. 2 and FIG. 3, a mounting hole 11 is provided on the cover plate body 1. The first electrode terminal 2 extends through the mounting hole 11 to be mounted to the cover plate body 1. A hole wall of the mounting hole 11 and the first electrode terminal 2 are spaced apart from each other. A first insulating member 4 is sleeved on a circumferential wall of an external end of the first electrode terminal 2. The resistive coating 3 is arranged on the first insulating member 4. The "external end of the first electrode terminal 2" is a part of the first electrode terminal 2 protruding from an external surface of the cover plate body 1, that is, the part of the first electrode terminal 2 except for a part mated in the mounting hole 11. Therefore, the first insulating member 4 is sleeved on the circumferential wall of the external end of the first electrode terminal 2, to avoid direct conduction between the first electrode terminal 2 and the cover plate body 1. Through the arrangement of the resistive coating 3 on the first insulating member 4, the resistive coating 3 not only can realize the electrical connection between the first electrode terminal 2 and the cover plate body 1, but also may reduce the space occupied, and cause the structure of the battery module to be more compact, thereby increasing the volumetric energy density of the battery module.

Optionally, a second insulating member (not shown in the figure) may be arranged between the hole wall of the mounting hole 11 and the first electrode terminal 2. Through such an arrangement, a direct electrical connection between the first electrode terminal 2 and the cover plate body 1 may be avoided. Certainly, the present disclosure is not limited thereto. A certain distance may also be predetermined between the hole wall of the mounting hole 11 and the first electrode terminal 2, to prevent direction conduction between the first electrode terminal 2 and the cover plate body 1.

In some embodiments of the present disclosure, referring to FIG. 1 and FIG. 2, the first electrode terminal 2 includes a pole 21 and an electrode cap 22 extending outward from the pole 21 along a radial direction of the pole 21. The resistive coating 3 include a first section 31, a second section 32, and a third section 33. The first section 31 is arranged between the electrode cap 22 and the first insulating member 4. The second section 32 is arranged between the first insulating member 4 and the cover plate body 1. The third section 33 is connected between the first section 31 and the second section 32. For example, in the example of FIG 1, the first insulating member 4 is sleeved outside the pole 21. The resistive coating 3 is roughly I-shaped. The first section 31 and the second section 32 both extend along a circumferential direction of the first insulating member 4. The first section 31 is electrically connected with the first electrode terminal 2. The second section 32 is electrically connected with the cover plate body 1. The third section 33 is connected between the first section 31 and the second section 32. During the fabrication, the first section 31 may be first fabricated on a peripheral surface and a top surface of the first insulating member 4, and the second section 32 may be fabricated on the peripheral surface and a bottom surface of the first insulating member 4. During the mounting, the electrode cap 22 is supported on the first insulating member 4 to come into contact with the first section 31, and the first insulating member 4 is supported on the cover plate body 1 to cause the second section 32 to come into contact with the cover plate body 1. In this way, the electrical connection between the first electrode terminal 2 and the cover plate body 1 is realized. Certainly, the resistive coating 3 may also be fabricated after the first electrode terminal 2, the first insulating member 4, and the cover plate body 1 are mounted. In this way, the first section 31 covers external surfaces of the first insulating member 4 and the electrode cap 22, and the second section 32 covers external surfaces of the first insulating member 4 and the cover plate body 1. Therefore, the electrical connection between the first electrode terminal 2 and the cover plate body 1 may also be realized. Therefore, through the above arrangement, the structure is simple, the operation is convenient, and the electrical connection between the first electrode terminal 2 and the cover plate body 1 can be desirably realized.

Further, referring to FIG. 1, the weak portion 331 is arranged on the third section 33, and the third section 33 includes a first coating portion and a second coating portion. Specifically, the first coating portion is arranged on an external surface of the first insulating member 4 and connected with the first section 31. The second coating portion is arranged on the external surface of the first insulating member 4 and connected with the second section 32. The weak portion 331 is connected between the first coating portion and the second coating portion. Therefore, the third section 33 is reliably connected with the first section 31 and the second section 32 by arranging the above third section 33, thereby realizing the electrical connection between the first electrode terminal 2 and the cover plate body 1. In addition, when the short circuit inside the battery module occurs, the weak portion 331 on the third section 33 may cut off the short circuit and prevent thermal runaway.

In a further embodiment of the present disclosure, as shown in FIG. 1 to FIG. 3, the cover plate assembly 100 further includes an annular disc 111. The annular disc 111 is mated in the mounting hole 11 and is electrically connected with the cover plate body 1. The first insulating member 4 is supported on the annular disc 111, and the pole 21 successively extends through the first insulating member 4 and the annular disc 111 to be mounted to the cover plate body 1. A gap is provided between the annular disc 111 and a peripheral surface of the pole 21, to prevent the pole 2 from being directly electrically connected with the cover plate through the annular disc 111. The first insulating member 4 is arranged between the annular disc 111 and the electrode cap 22, and the second section 32 of the resistive coating 3 is arranged between the first insulating member 4 and the annular disc 111. For example, in the example of FIG. 2, the annular disc 111 is mounted to the mounting hole 11 on the cover plate body 1. The first insulating member 4 is supported between the electrode cap 22 and the annular disc 111. After the cover plate body 1 is electrically connected with the annular disc 111, the cover plate body is electrically connected with the first electrode terminal 2 by the resistive coating 3 arranged on the first insulating member 4. Optionally, referring to FIG. 3, the annular disc 111 may include a top portion 1111, a bottom portion 1112, and a connecting portion 1113. The connecting portion 1113 is obliquely connected between the top portion 1111 and the bottom portion 1112. That is to say, an included angle between the connecting portion 1113 and the top portion 1111 and an included angle between the connecting portion 1113 and the bottom portion 1112 are not 90°. Specifically, the top portion 1111 and the bottom portion 1112 are parallel to each other. One end of the top portion 1111 is connected with one end of the connecting portion 1113, and another end of the top portion 1111 extends along a direction away from the pole 21. One end of the bottom portion 1112 is connected with another end of the connecting portion 1113, and another end of the bottom portion 1112 extends along a direction toward the pole 21. The top portion 1111, the bottom portion 1112, and the connecting portion 1113 of the annular disc 111 are all arranged between the pole 21 and the cover plate body 1. The bottom portion 1112 of the annular disc 111 is in contact with the cover plate body 1 to realize the electrical connection between the annular disc 111 and the cover plate body 1. The first insulating member 4 is supported on an upper surface of the top portion 1111, and the upper surface of the first insulating member 4 is connected with the electrode cap 22. Because the resistive coating 3 is arranged on the first insulating member 4, the annular disc 111 is electrically connected with the first electrode terminal 2 through the resistive coating 3 on the first insulating member 4. Certainly, the structure of the annular disc 111 is not limited thereto. It may be understood that the specific structure of the annular disc 111 may be specifically arranged according to an actual requirement to satisfy actual application more desirably.

Optionally, referring to FIG. 1 and FIG. 2, the first insulating member 4 is a ceramic ring. For example, in the examples of FIG. 1 and FIG. 2, the first insulating member 4 is an annular structure, and the first insulating member 4 surrounds a periphery of the pole 21 to separate the pole 21 from the cover plate body 1. Therefore, the ceramic ring is used as the first insulating member 4 due to low costs of the ceramic ring. In this way, the costs of the entire cover plate assembly 100 are reduced while ensuring that the first insulating member 4 may separate the pole 21 from the cover plate body 1.

Optionally, the resistive coating 3 includes a nickel-plated layer. Therefore, due to the strong passivation ability of nickel, an extremely thin passivation film can be rapidly formed on the surface to resist the corrosion of atmosphere, alkali, and some acid. In this way, the nickel-plated layer has high stability in the air and has desirable conductivity.

Optionally, the first insulating member 4 is connected with both the pole 21 and the annular disc 111 by brazing. Through such an arrangement, the first insulating member 4 can be securely connected with the pole 21 and the annular disc 111. In this way, the structural stability of the entire cover plate assembly 100 may be improved, and the service life of the battery may be prolonged.

Optionally, as shown in FIG. 1 and FIG. 2, the cover plate assembly 100 further includes a cover plate insulating member 5 and an inner lead-out sheet 6.

The battery according to the embodiment of the second aspect of the present disclosure includes the cover plate assembly 100 according to the embodiment of the first aspect of the present disclosure.

According to the battery of the embodiment of the present disclosure, the above cover plate assembly 100 is used to prevent the cover plate or the explosion-proof valve from being corroded and reduce the number of voltage sampling harnesses and temperature sampling harnesses of the battery, thereby reducing the costs. In addition, the safety of the battery can be improved.

The battery module according to the embodiment of the third aspect of the present disclosure includes the battery according to the embodiment of the second aspect of the present disclosure.

For the battery module according to the embodiments of the present disclosure, the above battery is used, and the resistive coating 3 may reduce the short-circuit current in case of the short circuit inside battery module, thereby preventing occurrence of arcing, fire, and even explosion accidents, and greatly improving the safety of the battery module.

A power battery pack (not shown in the figure) according to the embodiment of the fourth aspect of the present disclosure includes the battery module according to the embodiment of the third aspect of the present disclosure.

For the power battery pack according to the embodiment of the present disclosure, the above battery module is used to improve the safety of the battery module and prevent occurrence of thermal runaway, thereby improving the safety of the entire power battery pack.

An electric vehicle (not shown in the figure) according to the embodiment of the fifth aspect of the present disclosure includes the power battery pack according to the embodiment of the fourth aspect of the present disclosure.

For the electric vehicle according to the embodiment of the present disclosure, the above power battery pack is used to improve the entire performance of the electric vehicle and prevent occurrence of arcing, fire, and even explosion accidents, thereby fully ensuring the safety of passengers in the vehicle.

Other components such as a body and operations of the electric vehicle according to the embodiment of the present disclosure are known to those of ordinary skill in the art, and the details will not be described herein.

In the description of the present disclosure, it is to be understood that the orientations or positional relationships indicated by the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", etc. are the orientations or positional relationships shown in the drawings, are merely to facilitate describing the present disclosure and to simplify the description, are not intended to indicate or imply that the referenced device or element needs to have a particular orientation, be constructed and operated in a particular orientation, and therefore are not to be construed as limiting the present disclosure.

In addition, terms "first" and "second" are used merely for the purpose of description, and shall not be construed as indicating or implying relative importance or implying a quantity of indicated technical features. Therefore, features defining "first" and "second" may explicitly or implicitly include one or more such features. In the description of the present disclosure, the meaning of "plurality" is more than two unless specifically defined otherwise.

In the present disclosure, it should be noted that unless otherwise explicitly specified and limited, the terms "mount", "connect", "connection", and "fix" should be understood in a broad sense. For example, a connection may be a fixed connection, a detachable connection, an integral connection; or the connection may be a mechanical connection or an electrical connection; or the connection may be a direct connection, an indirect connection through an intermediate medium, internal communication between two components, or an interaction relationship between two components.

The specific meanings of the above terms in the present disclosure may be understood according to specific circumstances for those ordinary skill in the art. In the present disclosure, unless expressly stated and defined otherwise, a first feature "on" or "beneath" a second feature may be that the first and second features are in direct contact, or that the first and second features are in indirect contact via an intermediary. Moreover, the first feature "over", "above" and "up" the second feature may be that the first feature is directly above or obliquely above the second feature, or simply indicates that a horizontal height of the first feature is higher than that of the second feature. The first feature "under", "below" and "down" the second feature may be that the first feature is directly below or obliquely below the second feature, or simply indicates that a horizontal height of the first feature is less than that of the second feature.

In the description of the present specification, reference to the description of the terms "one embodiment", "some embodiments", "examples", "specific examples", or "some examples", etc. means that specific features, structures, materials, or characteristics described in connection with the embodiment or example are included in at least one embodiment or example of the present disclosure. In the present specification, schematic representations of the above terms are not necessarily directed to the same embodiments or examples. Moreover, the specific features, structures, materials, or characteristics described may be combined in any one or more embodiments or examples in a suitable manner. In addition, different embodiments or examples described in the present specification, as well as features of different embodiments or examples, may be integrated and combined by those skilled in the art without contradicting each other.

While the embodiments of the present disclosure have been shown and described above, it is to be understood that the above-described embodiments are illustrative and not to be construed as limiting the present disclosure, and changes, modifications, substitutions, and variations of the above-described embodiments may occur to those of ordinary skill in the art within the scope of the disclosure.

## Claims

1. A cover plate assembly of a battery, comprising: a cover plate body, a first electrode terminal, a second electrode terminal, and a resistive coating, wherein the second electrode terminal is insulatively connected with the cover plate body; the first electrode terminal is electrically connected with the cover plate body by the resistive coating; the resistive coating comprises a weak portion; and the weak portion is configured to disconnect the cover plate body from the first electrode terminal by melting when a current flowing through the resistive coating is greater than a predetermined threshold.

2. The cover plate assembly of a battery according to claim 1, wherein a size of the weak portion is smaller than sizes of other parts of the resistive coating.

3. The cover plate assembly of a battery according to claim 1 or 2, wherein a mounting hole is provided on the cover plate body; the first electrode terminal is mounted to the cover plate body by extending through the mounting hole; a hole wall of the mounting hole and the first electrode terminal are spaced apart from each other;
a first insulating member is sleeved on a circumferential wall of an external end of the first electrode terminal; and the resistive coating is arranged on the first insulating member.

4. The cover plate assembly of a battery according to claim 3, wherein a second insulating member is arranged between the hole wall of the mounting hole and the first electrode terminal.

5. The cover plate assembly of a battery according to claim 3 or 4, wherein the first electrode terminal comprises a pole and an electrode cap extending outward from the pole along a radial direction of the pole;
the resistive coating comprises a first section, a second section, and a third section; the first section is arranged between the electrode cap and the first insulating member; the second section is arranged between the first insulating member and the cover plate body; and the third section is connected between the first section and the second section.

6. The cover plate assembly of a battery according to claim 5, wherein the weak portion is arranged on the third section; and the third section comprises:
a first coating portion, arranged on an external surface of the first insulating member and connected with the first section; and
a second coating portion, arranged on the external surface of the first insulating member and connected with the second section, wherein the weak portion is connected between the first coating portion and the second coating portion.

7. The cover plate assembly of a battery according to claim 5 or 6, further comprising:
an annular disc, mated in the mounting hole and electrically connected with the cover plate body, wherein the first insulating member is supported on the annular disc; the pole successively extends through the first insulating member and the annular disc to be mounted to the cover plate body; the first insulating member is arranged between the annular disc and the electrode cap; and the second section of the resistive coating is arranged between the first insulating member and the annular disc.

8. The cover plate assembly of a battery according to any of claims 3 to 7, wherein the first insulating member is a ceramic ring.

9. The cover plate assembly of a battery according to any of claims 1 to 8, wherein the resistive coating comprises a nickel-plated layer.

10. A battery, comprising the cover plate assembly according to any of claims 1 to 9.

11. A battery module, comprising the battery according to claim 10.

12. A power battery pack, comprising the battery module according to claim 11 or the battery according to claim 10.

13. An electric vehicle, comprising the power battery pack according to claim 12.
